# EUROPÄISCHE PATENTSCHRIFT

(11) **EP 2 446 196 B1**
(45) Veröffentlichungstag und Bekanntmachung des Hinweises auf die Patenterteilung: **24.07.2013**
(21) Anmeldenummer: 10723609.3
(22) Anmeldetag: 16.06.2010
(51) Int. Cl.: F24D 3/04, F24D 3/10, F24D 11/00, F24D 19/00, F24J 2/46

(54) **VERFAHREN ZUR BEREITSTELLUNG VON WÄRME**
METHOD FOR PROVIDING HEAT
PROCÉDÉ POUR FOURNIR DE LA CHALEUR

(30) Priorität: 25.06.2009 AT 9782009
(43) Veröffentlichungstag der Anmeldung: 02.05.2012
(73) Patentinhaber: VKR Holding A/S, 2970 Hørsholm (DK)
(72) Erfinder: ENGELHART, Klaus, A-3508 Höbenbach (AT)
(74) Vertreter: Babeluk, Michael
(86) Internationale Anmeldenummer: PCT/EP2010/058438
(87) Internationale Veröffentlichungsnummer: WO 2010/149550

(56) Entgegenhaltungen:
- DE-A1- 19 953 493
- DE-U1- 20 206 564
- FR-A1- 2 394 765
- FR-A1- 2 847 663
- US-A- 4 269 167

## Beschreibung

Die Erfindung betrifft ein Verfahren gemäß dem Oberbegriff von Patentanspruch 1. Zur Bereitstellung von Wärme zur Beheizung von Gebäuden und gegebenenfalls zur Erwärmung von Brauchwasser über einen Solarkollektor ist dabei ein Verfahren vorgesehen, bei dem der Solarkollektor bei Sonneneinstrahlung mit einem Wärmeträgermedium gefüllt und durchströmt wird, um das Wärmeträgermedium zu erwärmen, und bei dem der Solarkollektor ansonsten entleert wird, wobei das Wärmeträgermedium in einem Speicherbehälter gesammelt wird, und wobei das Wärmeträgermedium im Speicherbehälter und im Solarkollektor unter erhöhtem Druck gehalten wird.

Die Standardbauweise von Solaranlagen besteht darin, dass ein Wärmeträgermedium durch den Solarkollektor in einem geschlossenen Kreislauf geführt wird. Da der Solarkollektor dabei stets gefüllt bleibt, ist es erforderlich, entsprechende technische Vorkehrungen zu treffen, um einen sicheren Betrieb zu gewährleisten, wie etwa Frostschutzmittel, Ausgleichsbehälter und dergleichen. In bestimmten Anwendungsfällen ist jedoch eine Vereinfachung dieses Aufbaus erwünscht, um eine besondere Robustheit und Kosteneffizienz zu erreichen. Aus diesem Grund sind Solaranlagen entwickelt worden, bei denen der Solarkollektor nur bei Betrieb mit Wärmeträgermedium geflutet ist und ansonsten entleert wird. Eine solche Anlange ist in der DE 20 20 6564 U offenbart. Bei einer solchen Anlage wird das Wärmeträgermedium einem Speicherbehälter entnommen und zur Erwärmung durch den Solarkollektor gepumpt, wenn ein entsprechendes Wärmeangebot vorliegt. Bei Stillstand der Pumpe entleert sich der Solarkollektor, so dass auch ohne Frostschutzmittel keine Gefahr des Einfrierens besteht. Darüber hinaus kann bei bereits voll geladenem Speicher ein Überhitzen oder Verdampfen der Flüssigkeit verhindert werden, wodurch die Gefahren der Stagnation vermieden werden.

Nachteilig der gegebenen Lösung ist, dass für die Nutzung der Wärme in einer Gebäudeheizung mindestens ein Wärmetauscher erforderlich ist, und dass es bei starker Sonneneinstrahlung und geringem Verbrauch zu Verlusten an Wärmeträgermedium durch Verdunsten kommen kann. Zusätzlich kann durch die Aufnahme von Sauerstoff aus der Luft Korrosion auftreten.

Darüber hinaus zeigt die US 4,269,167 A ein geschlossenes System aus Solarkollektor, Ausgleichsbehälter und Wärmetauscher. Durch eine mögliche Druckbeaufschlagung kann die Verdampfungs- und Sauerstoff-Problematik verringert werden, es besteht aber weiterhin der Nachteil der mangelnden Effizienz und des erforderlichen Aufwands.

Aus der FR 2 394 765 A ist ein Verfahren der oben beschriebenen Art bekannt, bei dem ein externer Ausgleichsbehälter vorgesehen ist. Damit sind mehrere Anlagenkomponenten erforderlich, um die gestellten Anforderungen zu erfüllen.

Aufgabe der vorliegenden Erfindung ist es, diese Nachteile zu vermeiden und eine Lösung anzugeben, die einfach, kostengünstig, robust und effizient zu gleich ist. Mit robust ist nicht nur eine Unempfindlichkeit im mechanischen Sinne gemeint, sondern auch ein unproblematisches Regelverhalten. Effizient bedeutet hauptsächlich einen hohen Wirkungsgrad und eine gute Ausnützung des Wärmeangebots.

Erfindungsgemäß ist das Verfahren gemäß Patentanspruch 1 dadurch gekennzeichnet, dass der Speicherbehälter in allen Betriebszuständen teilweise mit Wärmeträgermedium und teilweise mit Gas gefüllt ist dass das Wärmeträgermedium direkt zur Beheizung eines Gebäudes aus dem Speicherbehälter entnommen wird. Zusätzlich kann Brauchwasser erwärmt werden.

Wesentlich an der vorliegenden Erfindung ist die Tatsache, dass das Gesamtsystem stets unter einem Druck gehalten wird, wodurch mehrere Ziele gleichzeitig erreicht werden.

Durch die erfindungsgemäße Lösung kann das unter Druck vorliegende Wärmeträgermedium direkt zur Gebäudeheizung verwendet werden, so dass jeglicher Wärmetauscher im Heizsystem vermieden werden kann. Typischerweise bedeutet ein Wärmetauscher einen Temperaturverlust von etwa 3 K bis 5 K, was zu einer entsprechenden Einbuße im Wirkungsgrad führt. Gleichzeitig aber entfällt bei der erfindungsgemäßen Lösung die Notwendigkeit für den Einbau von herkömmlichen Ausgleichsbehältern, da der Speicherbehälter selbst als Ausgleichsbehälter dient. Durch die Erhöhung des Siedepunktes des Wärmeträgermediums kann dieses im Solarkollektor auf höhere Temperaturen erwärmt werden. Typischerweise besteht das Wärmeträgermedium hauptsächlich aus Wasser, das unter Normaldruck bei 100°C siedet. Mit der erfindungsgemäßen Lösung können durchaus auch Temperaturen von 120°C bis 140°C zugelassen werden. In Folge des geschlossenen Systems kommt es zu keinen Verlusten an Wärmeträgermedium.

Besonders vorteilhaft ist es in diesem Zusammenhang, wenn im Speicherbehälter eine Temperaturschichtung aufrecht erhalten wird. Auf diese Weise kann die Gesamtenergieeffizienz besonders gesteigert werden, da in der Regel auch bei geringer Sonneneinstrahlung Energie auf niedrigem Temperaturniveau genutzt werden kann.

Ein besonders einfacher Aufbau wird erreicht, wenn das Wärmeträgermedium im Speicherbehälter eine freie Oberfläche aufweist. Membranen oder dergleichen sind zur Trennung von Luft und Wärmeträgermedium nicht erforderlich.

Gemäß einer Variante der Erfindung können mehrere Solarkollektoren und/oder Speicherbehälter parallel geschaltet werden. Auf diese Weise ist es nicht nur möglich, die Gesamtleistung zu erhöhen, sondern auch einer Ost-West-Ausrichtung der Solarkollektoren Rechnung zu tragen, wenn dies aufgrund von baulichen Gegebenheiten erforderlich ist.

Gemäß einer besonders bevorzugten Ausführungsvariante der Erfindung ist vorgesehen, dass Brauchwasser erwärmt wird, indem es durch einen Wärmetauscher im Speicherbehälter geführt wird. Auf diese Weise kann mit einfachen Mitteln eine Solaranlage dargestellt werden, die sowohl zur Beheizung als auch zur Warmwasserbereitung dient. Durch einen Spiralrohrwärmetauscher der sich in vertikaler Richtung über einen wesentlichen Teil des Speicherbehälters streckt, kann die Temperaturschichtung des Wärmeträgermediums im Speicherbehälter optimal ausgenützt werden.

Im einfachsten Fall wird als Gas Luft eingesetzt, wobei aber auch Systeme mit Stickstofffüllung sinnvoll sind. Der Druck im System wird typischerweise auf einen Wert zwischen 2 bar und 5 bar eingestellt.

Weiters betrifft die vorliegende Erfindung eine Vorrichtung zur Durchführung des obigen Verfahrens gemäß Patentanspruch 8. Diese Vorrichtung ist zur Bereitstellung von Wärme zur Beheizung von Gebäuden mit einem Solarkollektor, einem Speicherbehälter und einem Heizungssystem versehen, wobei das System aus Solarkollektor, Speicherbehälter und Heizungssystem als geschlossenes, unter Druck mit einem einzigen Wärmeträgermedium füllbares System ausgebildet ist.

Erfindungsgemäß ist vorgesehen, dass der Solarkollektor mit einer Einrichtung zur betriebsmäßigen Entleerung versehen ist, dass der Speicherbehälter zusätzlich zum Wärmeträgermedium mit Gas füllbar ist, dass eine Zufuhrleitung-zum Solarkollektor vorgesehen ist, die vom unteren Bereich des Speicherbehälters ausgeht und in der eine Förderpumpe vorgesehen ist, und dass eine Rückführleitung vorgesehen ist, die in einen oberen Bereich des Speicherbehälters mündet. Die erfindungsgemäße Vorrichtung ist so ausgebildet, dass eine Zuführleitung zum Solar- x kollektor vorgesehen ist, die vom unteren Bereich des Speicherbehälters ausgeht und in der eine Förderpumpe vorgesehen ist, und dass eine Rückführleitung vorgesehen ist, die in einen oberen Bereich des Speicherbehälters mündet, der oberhalb einer maximalen Füllgrenze für das Wärmeträgermedium liegt. Auf diese Weise kann die Belüftung des Solarkollektors in einfacher Weise durch Abschalten der Förderpumpe erfolgen, wenn diese so ausgebildet ist, dass sie entgegen der Förderrichtung durchströmbar ist. Wichtig dabei ist, dass der Solarkollektor ausreichend oberhalb des Speicherbehälters angeordnet ist.

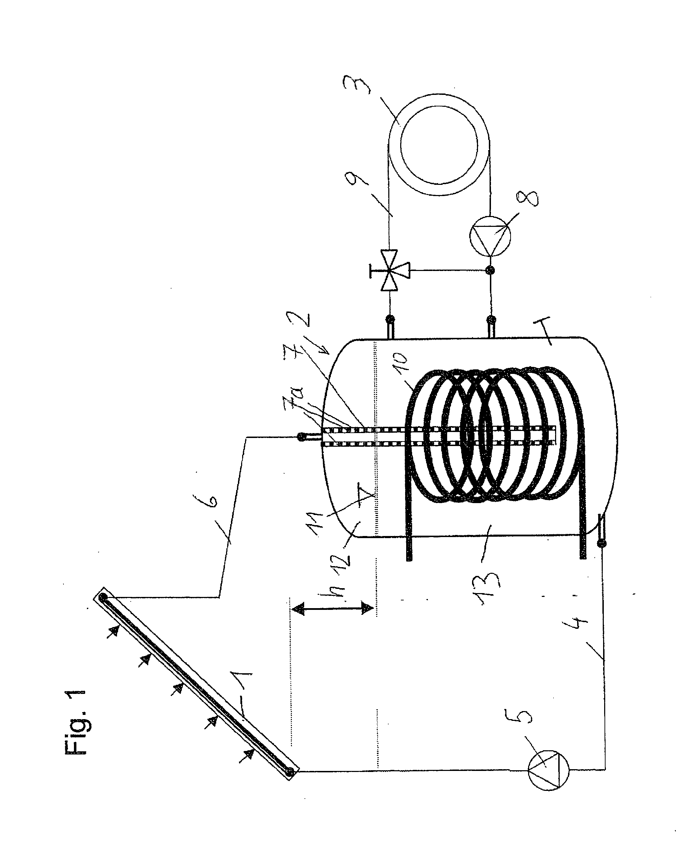

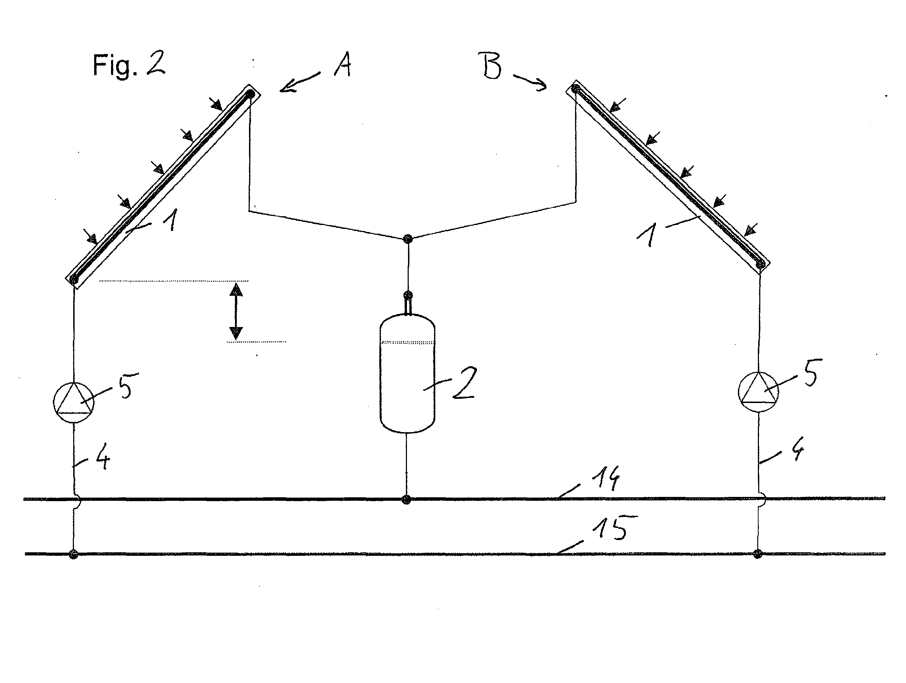

In der Folge wird die vorliegende Erfindung anhand der in den Figuren dargestellten Ausführungsbeispiele näher erläutert. In Fig. 1 ist schematisch eine erfindungsgemäße Vorrichtung dargestellt, Fig. 2 zeigt eine alternative Ausführungsvariante.

Die erfindungsgemäße Vorrichtung von Fig. 1 besteht aus einem Solarkollektor 1 und einem Speicherbehälter 2, sowie einem Heizungssystem 3 für ein nicht näher dargestelltes Gebäude. Bei dem Heizungssystem 3 kann es sich in an sich bekannter Weise um ein System aus Radiatoren, oder um eine Fußboden- oder Wandheizung handeln. Die Erwärmung des Wärmeträgermediums kann beispielsweise durch eine Wärmepumpe oder ein anderes Gerät direkt erfolgen, es kann aber auch das Wärmeträgermedium im Speicherbehälter 2 über einen Wärmetauscher oder einen elektrischen Heizstab erwärmt werden. Der Speicherbehälter 2 steht über eine Zuführleitung 4 mit einer Förderpumpe 5 mit dem Solarkollektor 1 in Verbindung. An der Oberseite des Solarkollektors 1 ist eine Rückführleitung 6 angebracht, die in den Speicherbehälter 2 mündet. Um eine entsprechende Temperaturschichtung zu erzielen, setzt sich die Rückführleitung 6 in ein Schichtungsrohr 7 fort, dass eine Vielzahl vertikal übereinander angeordneter Rückströmöffnungen 7a aufweist.

Um bei Bedarf eine sichere Rückströmung des Wärmeträgermediums zu gewährleisten, ist der Solarkollektor 1 um eine Höhe h oberhalb des Speicherbehälters 2 angeordnet.

Das Heizungssystem besteht aus einem Heizleitungssystem .9 mit einer Heizungspumpe 8, das direkt an den Speicherbehälter 2 angeschlossen ist und dementsprechend mit dem selben Wärmeträgermedium durchströmt wird, wie der Solarkollektor 1.

Weiters ist im Speicherbehälter 2 ein Spiralrohrwärmetauscher 10 für die Warmwasserbereitung vorgesehen, der sich in an sich bekannter Weise vertikal über einen wesentlichen Abschnitt des Speicherbehälters 2 erstreckt.

Der Speicherbehälter 2 besitzt einen oberen Abschnitt 12 in dem ein Gas, beispielsweise Luft, vorliegt. Der Bereich 13 ist mit Wärmeträgermedium gefüllt, das eine freie Oberfläche 11 aufweist. Wesentlich ist, dass die Rückführleitung 6 bzw. das Schichtrohr 7 eine Öffnung aufweist, die oberhalb einer maximalen Füllhöhe für den Speicherbehälter 2 liegt.

In der Folge wird der Betrieb der erfindungsgemäßen Vorrichtung erläutert. Bei entsprechender Sonneneinstrahlung wird die Förderpumpe 5 in Betrieb genommen und der Solarkollektor 1 wird mit Wärmeträgermedium gefüllt, das über die Rückführleitung 6 in den Speicherbehälter 2 zurückströmt. Solange das rückströmende Wärmeträgermedium eine höhere Temperatur aufweist, als das im Speicherbehälter 2 vorliegende Wärmeträgermedium, wird das vom Solarkollektor 2 rückgeführte Wärmeträgermedium an der höchsten Stelle des Schichtrohrs 7 ausströmen und somit eine Temperaturschichtung im Speicherbehälter 2 erzeugen. Liegt jedoch die Temperatur des rückströmenden Wärmeträgermediums zwischen der Temperatur im unteren Abschnitt des Speicherbehälters 2 und der Temperatur des Wärmeträgermediums im oben Abschnitt des Speicherbehälters 2, so wird das Wärmeträgermedium hauptsächlich zwischen diesen Bereichen ausströmen. Der Speicherbehälter 2 wird daher unter Aufrechterhaltung der Temperaturschichtung im Wesentlichen von oben nach unten aufgeladen.

Im oberen Bereich 12 des Speicherbehälters 2 ist ein Luftraum ausgebildet, indem Luft unter einem Druck von etwa 3 bar vorliegt, wobei das Volumen dieses Luftraumes jedenfalls größer ist als das Volumen des Solarkollektors 1 und der relevanten Leitungsabschnitte 4 zum bzw. 6 vom Solarkollektor 1. Wird nun die Förderpumpe 5 abgeschaltet, so strömt das Wärmeträgermedium entgegen der Förderrichtung der Förderpumpe 5 in den Speicherbehälter 2 zurück und es wird über die Rücklaufleitung 6 Luft aus dem oberen Abschnitt 12 des Speicherbehälters 2 in den Solarkollektor 1 nachgesaugt. Dadurch steigt der Flüssigkeitsspiegel 11 im Speicherbehälter 2 an und der Luftraum wird verkleinert. Das System wird jedoch so betrieben, dass jedenfalls ein minimaler Luftraum im Speicherbehälter 2 verbleibt. Durch die vollständige Entleerung des Solarkollektors 1 wird die Gefahr des Einfrierens bei entsprechend niedrigen Temperaturen völlig vermieden.

Der Luftraum 12 im Speicherbehälter 2 dient gleichzeitig auch als Ausgleichsraum für das Heizungssystem 3, das auf diese Weise auf einem passenden Druckniveau gehalten wird.

Da das System in sich geschlossen ist, hängt der Systemdruck selbstverständlich von der Temperatur des Wärmeträgermediums ab. Aufgrund des relativ groß dimensionierten Luftraumes sind diese Schwankungen jedoch gering und liegen im Normalfall in einem Bereich von wenigen zehntel bar.

Bei der Variante von Fig. 2 sind an einer Vorlaufleitung 14 und einer Rücklaufleitung 15 eines nicht näher dargestellten Heizungssystems zwei Solarsysteme A und B parallel geschaltet. Diese Systeme A und B bestehen jeweils aus einem Solarkollektor 1 mit einem gemeinsamen Speicherbehälter 2, sowie einer Förderpumpe 5 in der Zuführleitung 4. Die beiden Solarsysteme A und B können auf diese Weise unabhängig voneinander betrieben werden. Es ist auch möglich, für jeden der Solarkollektoren 1 einen eigenen Speicherbehälter 2 vorzusehen.

Bei Heizsystemen mit großer eigener Speicherkapazität, wie etwa Fußbodenheizungen, können die Speicherbehälter 2 relativ klein ausgeführt werden, im Extremfall so, dass in Betrieb, d.h. bei geflutetem Solarkollektor 1 nur eine Minimalmenge an Wärmeträgermedium im Speicherbehälter 2 vorliegt.

Das erfindungsgemäße System ist sehr robust, da auch Temperaturen von 120°C und mehr im Solarkollektor zugelassen werden können. Aber auch bei einem Überangebot an Solareinstrahlung und gleichzeitig mangelndem Verbrauch kann eine Überhitzung durch einfaches Abschalten der Förderpumpe 5 leicht vermieden werden, da auf diese Weise eine weitere Wärmezufuhr in das System unterbunden wird.

## Patentansprüche

1. Verfahren zur Bereitstellung von Wärme zur Beheizung von Gebäuden und gegebenenfalls zur Erwärmung von Brauchwasser über einen Solarkollektor (1), bei dem der Solarkollektor (1) bei Sonneneinstrahlung mit einem Wärmeträgermedium gefüllt und durchströmt wird, um das Wärmeträgermedium zu erwärmen, und bei dem der Solarkollektor (1) ansonsten entleert wird, wobei das Wärmeträgermedium in einem Speicherbehälter (2) gesammelt wird, und wobei das Wärmeträgermedium im Speicherbehälter (2) und im Solarkollektor (1) unter erhöhtem Druck gehalten wird, **dadurch gekennzeichnet, dass** der Speicherbehälter (2) in allen Betriebszuständen teilweise mit Wärmeträgermedium und teilweise mit Gas gefüllt ist und dass das Wärmeträgermedium direkt zur Beheizung eines Gebäudes aus dem Speicherbehälter (2) entnommen wird.

2. Verfahren nach Anspruch 1, **dadurch gekennzeichnet, dass** das im Speicherbehälter (2) vorliegende Wärmeträgermedium eine freie Oberfläche (11) aufweist.

3. Verfahren nach einem der Ansprüche 1 oder 2, **dadurch gekennzeichnet, dass** im Speicherbehälter (2) eine Temperaturschichtung aufrecht erhalten wird.

4. Verfahren nach einem der Ansprüche 1 bis 3, **dadurch gekennzeichnet, dass** Brauchwasser erwärmt wird, indem es durch einen Wärmetauscher (10) im Speicherbehälter (2) geführt wird.

5. Verfahren nach einem der Ansprüche 1 bis 4, **dadurch gekennzeichnet, dass** mehrere Solarkollektoren (1) und/oder Speicherbehälter (2) parallel geschaltet sind.

6. Verfahren nach einem der Ansprüche 1 bis 5, **dadurch gekennzeichnet, dass** als Gas Luft eingesetzt wird.

7. Verfahren nach einem der Ansprüche 1 bis 6, **dadurch gekennzeichnet, dass** der Druck in dem System aus Speicherbehälter (2), Solarkollektor (1) und Heizungssystem (3) auf einem Wert zwischen 2 und 5 bar gehalten wird.

8. Vorrichtung zur Bereitstellung von Wärme zur Beheizung von Gebäuden mit einem Solarkollektor (1), einem Speicherbehälter (2) und einem Heizungssystem (3), wobei das System aus Solarkollektor (1), Speicherbehälter (2) und Heizungssystem (3) als geschlossenes, unter Druck mit einem einzigen Wärmeträgermedium füllbares System ausgebildet ist, **dadurch gekennzeichnet, dass** der Solarkollektor (1) mit einer Einrichtung zur betriebsmäßigen Entleerung versehen ist, dass der Speicherbehälter (2) zusätzlich zum Wärmeträgermedium mit Gas füllbar ist, dass eine Zufuhrleitung (4) zum Solarkollektor (1) vorgesehen ist, die vom unteren Bereich (13) des Speicherbehälters (2) ausgeht und in der eine Förderpumpe (5) vorgesehen ist, und dass eine Rückführleitung (6) vorgesehen ist, die in einen oberen Bereich (12) des Speicherbehälters (2) mündet, der oberhalb einer maximalen Füllgrenze für das Wärmeträgermedium liegt.

9. Vorrichtung nach Anspruch 8, **dadurch gekennzeichnet, dass** der Speicherbehälter (2) in seinem oberen Abschnitt einen Gasraum (12) aufweist, der direkt oberhalb einer Oberfläche (11) des Wärmeträgermediums ausgebildet ist.

10. Vorrichtung nach einem der Ansprüche 8 oder 9, **dadurch gekennzeichnet, dass** mehrere Speicherbehälter (2) parallel geschaltet sind.

11. Vorrichtung nach einem der Ansprüche 8 bis 10, **dadurch gekennzeichnet, dass** im Speicherbehälter (2) ein Wärmetauscher (10) für die Erwärmung von Brauchwasser angeordnet ist.

12. Vorrichtung nach einem der Ansprüche 8 bis 11, **dadurch gekennzeichnet, dass** im Speicherbehälter (2) Mittel zur Aufrechterhaltung einer Temperaturschichtung angeordnet sind.

13. Vorrichtung nach Anspruch 12, **dadurch gekennzeichnet, dass** das Mittel zur Aufrechterhaltung einer Temperaturschichtung als Schichtrohr (7) ausgebildet ist.

## Claims

1. A method for providing heat for heating buildings and optionally for heating industrial water via a solar collector (1), in which the solar collector (1) is filled and permeated with a thermal carrier medium in the event of incident solar radiation, in order to heat the thermal carrier medium, and in which the solar collector (1) is otherwise emptied, the thermal carrier medium being collected in a storage reservoir (2), and the thermal carrier medium being kept under elevated pressure in the storage reservoir (2) and in the solar collector (1), **characterised in that** the storage reservoir (2) is partially filled with thermal carrier medium and partially filled with gas in all operating states, and the thermal carrier medium is removed directly from the storage reservoir (2) to heat the building.

2. The method according to claim 1, **characterised in that** the thermal carrier medium provided in the storage reservoir (2) has a free surface (11).

3. The method according to one of claims 1 or 2, **characterised in that** a temperature stratification is maintained in the storage reservoir (2).

4. The method according to one of claims 1 to 3, **characterised in that** industrial water is heated, **in that** it is conducted through a heat exchanger (10) in the storage reservoir (2).

5. The method according to one of claims 1 to 4, **characterised in that** multiple solar collectors (1) and/or storage reservoirs (2) are connected in parallel.

6. The method according to one of claims 1 to 5, **characterised in that** air is used as the gas.

7. The method according to one of claims 1 to 6, **characterised in that** the pressure in the system made of storage reservoir (2), solar collector (1), and heating system (3) is kept at a value between 2 and 5 bar.

8. A device for providing heat for heating buildings having a solar collector (1), a storage reservoir (2), and a heating system (3), the solar collector (1) being provided with an apparatus for operational emptying, the system made of solar collector (1), storage reservoir (2), and heating system (3) being implemented as a closed system fillable under pressure with a single thermal carrier medium, **characterised in that** the solar collector (1) is provided with a device for operational emptying, the storage reservoir (2) is fillable with gas in addition to the thermal carrier medium, a supply line (4) to the solar collector (1) is provided, which originates from the lower area (13) of the storage reservoir (2) and in which a delivery pump (5) is provided, and a return line (6) is provided, which opens into an upper area (12) of the storage reservoir (2), which is located above a maximum fill limit for the thermal carrier medium.

9. The device according to claim 8, **characterised in that** the storage reservoir (2) has a gas space (12) in its upper section, which is implemented directly above a surface (11) of the thermal carrier medium.

10. The device according to one of claims 8 or 9, **characterised in that** multiple storage reservoirs (2) are connected in parallel.

11. The device according to one of claims 8 to 10, **characterised in that** a heat exchanger (10) for heating industrial water is arranged in the storage reservoir (2).

12. The device according to one of claims 8 to 11, **characterised in that** means for maintaining a temperature stratification are arranged in the storage reservoir (2).

13. The device according to claim 12, **characterised in that** the means for maintaining a temperature stratification is implemented as a stratification pipe (7).

## Revendications

1. Procédé pour fournir la chaleur servant au chauffage d'un immeuble et, le cas échéant, au chauffage de l'eau sanitaire, à l'aide d'un collecteur solaire (1) selon lequel le collecteur solaire (1), est rempli d'un fluide caloporteur en cas de rayonnement solaire et est traversé par celui-ci pour chauffer le fluide caloporteur alors que dans d'autres conditions, le collecteur solaire (1) est vide,
- le fluide caloporteur étant accumulé dans un réservoir accumulateur (2), et
- le fluide caloporteur étant sous pression élevée dans le réservoir d'accumulation (2) et le collecteur solaire (1),
procédé **caractérisé en ce que**
- dans tous les états de fonctionnement, le réservoir accumulateur (2) est rempli partiellement avec du fluide caloporteur et partiellement avec du gaz, et
- le fluide caloporteur est prélevé directement du réservoir accumulateur (2) pour le chauffage de l'immeuble.

2. Procédé selon la revendication 1,
**caractérisé en ce que**
dans le réservoir accumulateur (2) la surface supérieure (11), du fluide caloporteur est libre.

3. Procédé selon l'une des revendications 1 ou 2,
**caractérisé par**
une stratification de température maintenue dans le réservoir accumulateur (2).

4. Procédé selon les revendications 1 à 3,
**caractérisé en ce qu'**
on chauffe l'eau sanitaire en la faisant passer dans un échangeur de chaleur (10) dans le réservoir accumulateur (2).

5. Procédé selon les revendications 1 à 4,
**caractérisé par**
plusieurs collecteurs solaires (1) et/ou des réservoirs accumulateurs (2) branchés en parallèle.

6. Procédé selon les revendications 1 à 5,
**caractérisé en ce que**
le gaz utilisé est de l'air.

7. Procédé selon les revendications 1 à 6,
**caractérisé en ce qu'**
on maintient la pression entre 2 et 5 bars dans le système composé du réservoir accumulateur (2), le collecteur solaire (1) et du système de chauffage (3).

8. Dispositif pour fournir de la chaleur de chauffage d'immeuble comprenant un collecteur solaire (1), un réservoir accumulateur (2) et un système de chauffage (3),
- le système composé du collecteur solaire (1), du réservoir accumulateur (2) et du système de chauffage (3) étant un système fermé chargé sous pression d'un unique fluide caloporteur,
dispositif **caractérisé en ce que**
- le collecteur solaire (1) est muni d'une installation pour le vider selon le fonctionnement,
- le réservoir accumulateur (2) est rempli de gaz en plus du fluide caloporteur,
- une conduite d'alimentation (4) est prévue pour le collecteur solaire (1) qui est issue de la zone inférieure (13) du réservoir accumulateur (2) et comporte une pompe de circulation (5), et
- une conduite de retour (6) débouche dans la zone supérieure (12) du réservoir accumulateur (2), au-dessus de la limite maximale de remplissage en fluide caloporteur.

9. Dispositif selon la revendication 8,
**caractérisé en ce que**
dans sa partie supérieure, le réservoir accumulateur (2) a un volume de gaz (12) directement au-dessus de la surface (11) du fluide caloporteur.

10. Dispositif selon l'une des revendications 8 ou 9,
**caractérisé par**
plusieurs réservoirs accumulateurs (2) branchés en parallèles.

11. Dispositif selon les revendications 8 à 10,
**caractérisé en ce que**
le réservoir accumulateur (2) comporte un échangeur de chaleur (10) pour chauffer l'eau sanitaire.

12. Dispositif selon les revendications 8 à 11,
**caractérisé en ce que**
le réservoir accumulateur (2) comporte des moyens pour maintenir la stratification de température.

13. Dispositif selon la revendication 12,
**caractérisé en ce que**
le moyen pour maintenir la stratification de température est un tube de stratification (7).
